# EUROPEAN PATENT APPLICATION

(11) **EP 4 835 484 A1**
(43) Date of publication of application: **04.11.2026**
(21) Application number: 26175945.0
(22) Date of filing: 30.04.2026
(51) Int. Cl.: G01N 35/02, G01N 35/04

(54) **AUTOMATIC ANALYZING APPARATUS**

(30) Priority: 02.05.2025 JP 2025076948
(71) Applicant: CANON KABUSHIKI KAISHA, Ohta-ku Tokyo 146-8501 (JP)
(72) Inventor: SEMACHI, Takahiro, Tokyo 146-8501 (JP); MATSUDA, Isamu, Tokyo 146-8501 (JP); OGASAWARA, Makoto, Tokyo 146-8501 (JP); KODAKA, Tatsuaki, Tokyo 146-8501 (JP); OTANI, Shinji, Tokyo 146-8501 (JP)
(74) Representative: Marks & Clerk LLP

(57) **Abstract**

According to one embodiment, an automatic analyzing apparatus includes a first disposing unit and a second disposing unit. In the first disposing unit, a plurality of first reaction containers are arranged. In the first disposing unit, a sample and a first reagent are dispensed in the first reaction containers. In the second disposing unit, a plurality of second reaction containers are arranged along a circumferential direction. In the second disposing unit, a second reagent is dispensed in the second reaction containers that contain a first mixed liquid including the sample and the first reagent.

## Description

### FIELD

Embodiments described herein relate generally to an automatic analyzing apparatus.

### BACKGROUND

Conventionally, in an automatic analyzing apparatus, a reaction ring is known which annularly arranges and holds a plurality of reaction tubes (reaction containers). The rotation and stop of the reaction ring are alternately repeated at predetermined time intervals by the control of the automatic analyzing apparatus. The automatic analyzing apparatus including the reaction ring performs a measuring process by using the reaction containers held on the reaction ring.

In the above-described conventional automatic analyzing apparatus, a sample and a first reagent are dispensed in a reaction container on the reaction ring, and, after a predetermined time (predetermined standby time), a second reagent is dispensed in the same reaction container. Thereafter, a process of measuring a mixed liquid including the sample, the first reagent and the second reagent is performed. On the other hand, depending on an examination item, there is a case where the second reagent is dispensed immediately after the sample and the first reagent are dispensed in the reaction container, and the mixed liquid may be measured. Besides, depending on another examination item, there is a case where after the sample and the first reagent are dispensed in the reaction container, measurement does not necessarily need to be performed during a predetermined time until the dispensing of the second reagent is dispensed. However, even in such cases, the conventional automatic analyzing apparatus is configured to perform an operation of dispensing the second reagent on the reaction ring after the passage of a predetermined time, and, as a result, an unnecessary standby time occurs on the reaction ring. Such an unnecessary standby time on the reaction ring may lead to a factor of a decrease of the throughput of an examination.

Furthermore, in the conventional automatic analyzing apparatus, the number of reaction containers, which are held on the reaction ring, needs to be set by taking such an unnecessary standby time into account. Thus, in the conventional automatic analyzing apparatus, there may arise such programs as an increase in size of the reaction ring due to an increase in the number of reaction containers that are held, and an increase in size of the main body of the apparatus due to the increase in size of the reaction ring.

### BRIEF DESCRIPTION OF THE DRAWINGS

FIG. 1 is a block diagram exemplarily illustrating a functional configuration of an automatic analyzing apparatus according to a first embodiment.
FIG. 2 is a schematic diagram exemplarily illustrating a configuration of an analysis mechanism of FIG. 1.
FIG. 3 is a flowchart illustrating an example of an analysis operation according to the first embodiment.
FIG. 4 is a block diagram exemplarily illustrating a functional configuration of an automatic analyzing apparatus according to a second embodiment.
FIG. 5 is a schematic diagram exemplarily illustrating a configuration of an analysis mechanism of FIG. 4.
FIG. 6 is a flowchart illustrating an example of an analysis operation according to the second embodiment.
FIG. 7 is a block diagram exemplarily illustrating a functional configuration of an automatic analyzing apparatus according to a third embodiment.
FIG. 8 is a schematic diagram exemplarily illustrating a configuration of an analysis mechanism of FIG. 7.
FIG. 9 is a flowchart illustrating an example of an analysis operation according to the third embodiment.

### DETAILED DESCRIPTION

In general, according to one embodiment, an automatic analyzing apparatus includes a first disposing unit and a second disposing unit. In the first disposing unit, a plurality of first reaction containers are arranged. In the first disposing unit, a sample and a first reagent are dispensed in the first reaction containers. In the second disposing unit, a plurality of second reaction containers are arranged along a circumferential direction. In the second disposing unit, a second reagent is dispensed in the second reaction containers that contain a first mixed liquid including the sample and the first reagent.

Hereinafter, embodiments of an automatic analyzing apparatus are described in detail with reference to the accompanying drawings.

### (First Embodiment)

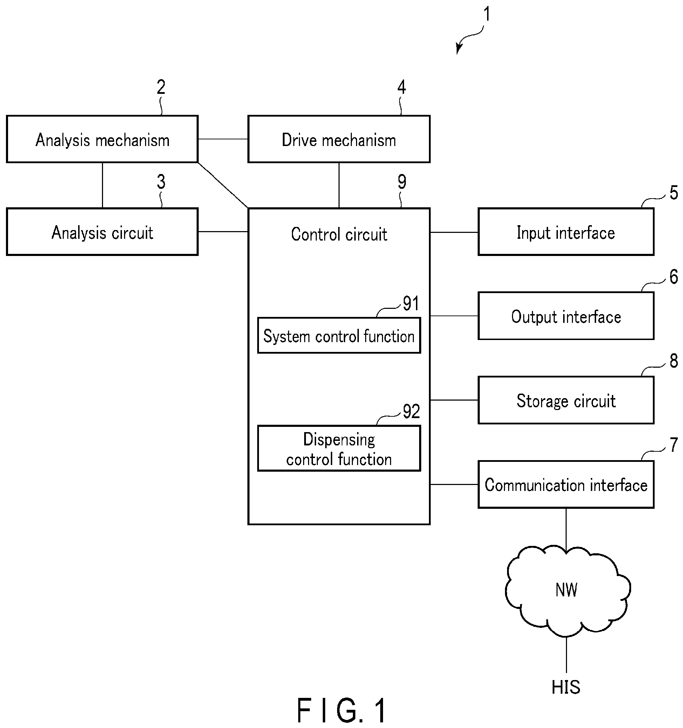

FIG. 1 is a block diagram exemplarily illustrating a functional configuration of an automatic analyzing apparatus according to a first embodiment. An automatic analyzing apparatus 1 illustrated in FIG. 1 includes an analysis mechanism 2, an analysis circuit 3, a drive mechanism 4, an input interface 5, an output interface 6, a communication interface 7, a storage circuit 8, and a control circuit 9 (processing circuitry).

The analysis mechanism 2 mixes a sample, such as a standard sample or a sample to be examined, with a reagent used for various examination items set for this sample. The analysis mechanism 2 measures a mixed liquid including the sample and the reagent, and generates standard data and examination data, which are represented by, for example, absorbance. Hereinafter, the "mixed liquid including a sample and a first reagent" may be referred to as "first mixed liquid", and the "mixed liquid including a sample, a first reagent and a second reagent" may be referred to as "second mixed liquid".

The analysis circuit 3 is a processor that generates calibration data, analysis data, and the like by analyzing the standard data and examination data generated by the analysis mechanism 2. The analysis circuit 3 reads an analysis program from the storage circuit 8, and generates calibration data, analysis data, and the like according to the read analysis program. For example, the analysis circuit 3 generates, based on the standard data, calibration data indicating a relationship between the standard data and a standard value set in advance for the standard sample. Further, the analysis circuit 3 generates, based on the examination data and the calibration data of the examination item corresponding to this examination data, analysis data that is represented as a concentration value and an enzyme activity value. The analysis circuit 3 outputs the generated calibration data, analysis data, and the like to the control circuit 9.

The drive mechanism 4 drives respective parts of the analysis mechanism 2 under the control of the control circuit 9. The drive mechanism 4 is realized by, for example, a gear, a stepping motor, a belt conveyor, a lead screw, and the like.

The input interface 5 receives, for example, from an operator, or via an in-hospital network NW, settings such as analysis parameters for each examination item related to the sample requested to be measured. The input interface 5 is realized by, for example, a mouse, a keyboard, a touch pad to which an instruction is input by touching an operation surface, and the like. The input interface 5 is connected to the control circuit 9, converts an operation instruction (input information) input from the operator into an electric signal, and outputs the electric signal to the control circuit 9.

Note that, in the present specification, the input interface 5 is not limited to those including physical operation components such as a mouse, a keyboard and a touch pad. Examples of the input interface 5 include a processing circuit that receives an electric signal corresponding to an operation instruction that is input from an external input device provided separately from the automatic analyzing apparatus 1, and outputs this electric signal to the control circuit 9.

The output interface 6 is connected to the control circuit 9, and outputs a signal that is supplied from the control circuit 9. The output interface 6 is realized by, for example, a display circuit, a printing circuit, an audio device, and the like. Examples of the display circuit include a CRT display, a liquid crystal display, an organic EL display, an LED display, a plasma display, and the like. In addition, the display circuit may include a processing circuit that converts data representing a display target into a video signal, and outputs the video signal to the outside. The printing circuit includes, for example, a printer or the like. In addition, the printing circuit may include an output circuit that outputs data representing a printing target to the outside. The audio device includes, for example, a speaker or the like. In addition, the audio device may include an output circuit that outputs an audio signal to the outside.

The communication interface 7 is connected to, for example, the in-hospital network NW. The communication interface 7 performs data communication with a hospital information system (HIS) via the in-hospital network NW. Note that the communication interface 7 may perform data communication with the HIS via a laboratory information system (LIS) connected to the in-hospital network NW.

The storage circuit 8 includes a recording medium that is readable by a processor, such as a magnetic recording medium, an optical recording medium, or a semiconductor memory. Note that the storage circuit 8 may not necessarily be realized by a single storage device. For example, the storage circuit 8 may be realized by a plurality of storage devices.

In addition, the storage circuit 8 stores an analysis program that is executed by the analysis circuit 3, and a control program for implementing functions that the control circuit 9 includes. The storage circuit 8 stores analysis data generated by the analysis circuit 3 with respect to each of examination items. The storage circuit 8 stores an examination order that has been input from the operator, or an examination order that the communication interface 7 has received via the in-hospital network NW.

The control circuit 9 controls the drive mechanism 4 and controls the driving of the respective parts of the analysis mechanism 2. In other words, the control circuit 9 controls the respective parts of the analysis mechanism 2. The control circuit 9 is a processor that functions as a center of the automatic analyzing apparatus 1. The control circuit 9 executes a control program stored in the storage circuit 8, thereby implementing a function corresponding to this executed control program. The function of the control circuit 9 will be described later. Note that the control circuit 9 may include a storage area that stores at least a part of the data stored in the storage circuit 8.

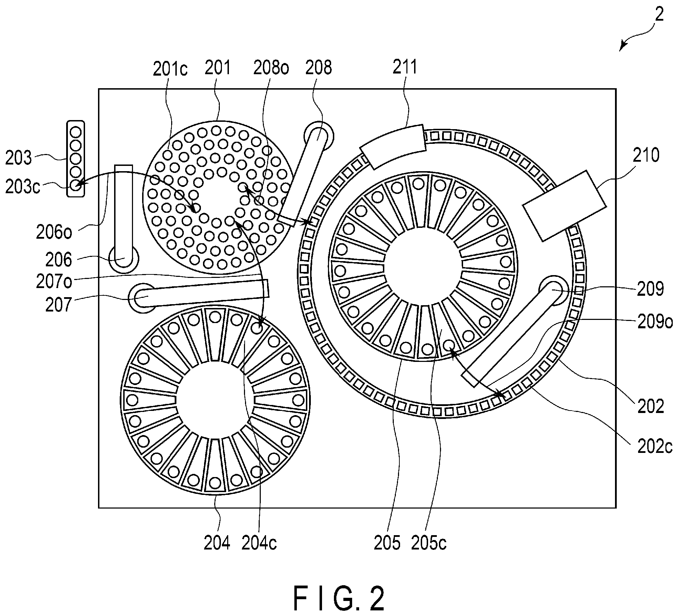

FIG. 2 is a schematic diagram exemplarily illustrating a configuration of the analysis mechanism of FIG. 1. The analysis mechanism 2 illustrated in FIG. 2 includes a first disposing unit 201, a second disposing unit 202, a sample rack 203, a first reagent storage 204, a second reagent storage 205, a sample dispensing arm 206, a first reagent dispensing arm 207, a transfer arm 208 (dispensing arm), a second reagent dispensing arm 209, a photometric unit 210, and a cleaning unit 211.

The first disposing unit 201 disposes and holds a plurality of first reaction containers 201c. For example, the first disposing unit 201 disposes and holds the first reaction containers 201c along directions of a plurality of circumferences. The plurality of circumferences mean circumferences having different diameters. In FIG. 2, four circumferences having different diameters are illustrated. The first disposing unit 201 conveys the first reaction containers 201c along a predetermined path. Specifically, the first disposing unit 201 rotates and stops at a discretionary timing in accordance the control of the control circuit 9. The first reaction containers 201c are formed of glass, polypropylene (PP), or an acrylic. Note that a plurality of sample discharge positions, a plurality of first reagent discharge positions and a plurality of mixed liquid suction positions are set at a plurality of locations on the first disposing unit 201. The "first disposing unit 201" may also be referred to as "reaction disk".

The second disposing unit 202 disposes and holds a plurality of second reaction containers 202c along a circumferential direction. The second disposing unit 202 conveys the second reaction containers 202c along a predetermined path. Specifically, the second disposing unit 202 alternately rotates and stops with a predetermined time interval (hereinafter, referred to as "one cycle") in accordance with the control of the control circuit 9. The second reaction containers 202c are formed of glass, polypropylene, or an acrylic. The shape of the second reaction container 202c may be different from, or identical to, the shape of the first reaction container 201c. Note that a mixed liquid discharge position, a second reagent discharge position and a plurality of cleaning positions are set at a plurality of locations on the second disposing unit 202. The "second disposing unit 202" may also be referred to as "reaction ring".

Note that the second reaction containers 202c may be immersed in water (thermostatic water) stored in a thermostatic bath. The thermostatic bath is a container for storing thermostatic water that is kept at a predetermined temperature (normally 37°C). The thermostatic water may include, for example, an additive for an antimicrobial purpose. The thermostatic bath heats a liquid (for example, mixed liquid) contained in the second reaction containers 202c and keeps the temperature of the liquid at a constant temperature, by immersing the second reaction containers 202c in the thermostatic water.

The sample rack 203 disposes and holds a plurality of sample containers 203c in a line, the sample containers 203c containing samples that are requested to be measured. Although not illustrated in FIG. 2, the analysis mechanism 2 may include a carrier for conveying the sample rack 203, and a rail for conveying the carrier along a predetermined path. Thus, the sample rack 203 may be conveyed in a predetermined direction.

The first reagent storage 204 keeps cool a plurality of first reagent containers 204c each containing a first reagent that reacts with a predetermined component included in a standard sample or a predetermined component included in a sample to be examined. Although not illustrated in FIG. 2, at a time when the analysis mechanism 2 is driven, the first reagent storage 204 is covered with a detachable cover. In the first reagent storage 204, a reagent rack is rotatably provided. The reagent rack annularly arranges and holds the first reagent containers 204c. The reagent rack rotates and stops at a discretionary timing in accordance with the control of the control circuit 9. In FIG. 2, although the first reagent containers 204c are arranged in an annular shape in the first reagent storage 204, the positions of arrangement of the first reagent containers 204c and the shape of the first reagent 204 are not particularly limited to those illustrated. In addition, the position of disposition of the first reagent storage 204 is not limited to the position illustrated in FIG. 2. Note that a first reagent suction position is set at a predetermined location on the first reagent storage 204.

The second reagent storage 205 is provided, for example, within the circumference of the second disposing unit 202. The second reagent storage 205 keeps cool a plurality of second reagent containers 205c each containing a second reagent that is paired with the first reagent of a two-reagent system. Although not illustrated in FIG. 2, at a time when the analysis mechanism 2 is driven, the second reagent storage 205 is covered with a detachable reagent cover. In the second reagent storage 205, a reagent rack is rotatably provided. The reagent rack annularly arranges and holds the second reagent containers 205c. The reagent rack rotates and stops at a discretionary timing in accordance with the control of the control circuit 9. Note that the second reagent that is kept cool in the second reagent storage 205 may be a reagent having the same components and the same concentration as the first reagent that is kept cool in the first reagent storage 204. In FIG. 2, although the second reagent storage 205 is provided within the circumference of the second disposing unit 202 and the second reagent containers 205c are annularly arranged, the position and shape of the second reagent storage 205 and the positions of arrangement of the second reagent containers 205c are not particularly limited to those illustrated. Note that a second reagent suction position is set at a predetermined location on the second reagent storage 205.

The sample dispensing arm 206 is provided, for example, between the first disposing unit 201 and the sample rack 203. The sample dispensing arm 206 is provided to be capable of moving up and down in a vertical direction and rotating in a horizontal direction in accordance with the control of the control circuit 9. The sample dispensing arm 206 holds a sample dispensing probe at a distal end thereof.

The sample dispensing probe rotates along an arcuate rotational trajectory 206o in accordance with the rotation of the sample dispensing arm 206. A sample suction position and a plurality of sample discharge positions are set on the rotational trajectory 206o. The sample suction position corresponds to, for example, an intersection between the rotational trajectory 206o and a trajectory of conveyance of the sample rack 203. The sample discharge positions correspond to, for example, intersections between the rotational trajectory 206o and trajectories of movement corresponding to the circumferences on which the first reaction containers 201c of the first disposing unit 201 are arranged.

In addition, in accordance with the vertical movement of the sample dispensing arm 206, the sample dispensing probe vertically moves immediately above an opening portion of the sample container 203c held in the sample rack 203, the position immediately above the opening portion corresponding to the sample suction position. Further, in accordance with the vertical movement of the sample dispensing arm 206, the sample dispensing probe vertically moves immediately above one of opening portions of the first reaction containers 201c of the first disposing unit 201, the positions immediately above the opening portions corresponding to the sample discharge positions.

Additionally, in accordance with the control of the control circuit 9, the sample dispensing probe sucks the sample from the sample container 203c that is positioned immediately below the sample suction position. Further, in accordance with the control of the control circuit 9, the sample dispensing probe discharges the sucked sample into the first reaction container 201c located immediately below one of the sample discharge positions. The sample dispensing probe performs this serial dispensing operation of suction and discharge, for example, once in one cycle.

Note that a cleaning position at which the sample dispensing probe is cleaned may be provided at a position different from the sample suction position and the sample discharge positions on the rotational trajectory 206o. Further, at the cleaning position, a cleaning bath for cleaning the sample dispensing probe may be provided in the analysis mechanism 2.

The first reagent dispensing arm 207 is provided, for example, between the first disposing unit 201 and the first reagent storage 204. The first reagent dispensing arm 207 is provided to be capable of moving up and down in the vertical direction and rotating in the horizontal direction in accordance with the control of the control circuit 9. The first reagent dispensing arm 207 holds a first reagent dispensing probe at a distal end thereof.

The first reagent dispensing probe rotates along an arcuate rotational trajectory 207o in accordance with the rotation of the first reagent dispensing arm 207. A first reagent suction position and a plurality of first reagent discharge positions are set on the rotational trajectory 207o. The first reagent suction position corresponds to, for example, an intersection between the rotational trajectory 207o and a trajectory of movement of opening portions of the first reagent containers 204c that are annularly arranged on the reagent rack of the first reagent storage 204. The first reagent discharge positions correspond to, for example, intersections between the rotational trajectory 207o and trajectories of movement corresponding to the circumferences on which the first reaction containers 201c of the first disposing unit 201 are arranged.

In addition, in accordance with the vertical movement of the first reagent dispensing arm 207, the first reagent dispensing probe vertically moves immediately above an opening portion of the first reagent container 204c held in the first reagent storage 204, the position immediately above this opening portion corresponding to the first reagent suction position. Further, in accordance with the vertical movement of the first reagent dispensing arm 207, the first reagent dispensing probe vertically moves immediately above one of the opening portions of the first reaction containers 201c of the first disposing unit 201, the positions immediately above @these opening portions corresponding to the first reagent discharge positions.

Additionally, in accordance with the control of the control circuit 9, the first reagent dispensing probe sucks the first reagent from the first reagent container 204c that is positioned immediately below the first reagent suction position. Further, in accordance with the control of the control circuit 9, the first reagent dispensing probe discharges the sucked first reagent into the first reaction container 201c that contains the sample and is located immediately below one of the first reagent discharge positions. The first reagent dispensing probe performs this serial dispensing operation of suction and discharge, for example, once in one cycle.

Note that a cleaning position at which the first reagent dispensing probe is cleaned may be provided at a position different from the first reagent suction position and first reagent discharge positions on the rotational trajectory 207o. Further, at the cleaning position, a cleaning bath for cleaning the first reagent dispensing probe may be provided in the analysis mechanism 2.

The transfer arm 208 is provided, for example, between the first disposing unit 201 and the second disposing unit 202. The transfer arm 208 is provided to be capable of moving up and down in the vertical direction and rotating in the horizontal direction in accordance with the control of the control circuit 9. The transfer arm 208 holds a transfer probe at a distal end thereof. The "transfer probe" may also be referred to as "dispensing probe".

The transfer probe rotates along an arcuate rotational trajectory 208o in accordance with the rotation of the transfer arm 208. A plurality of mixed liquid suction positions and a mixed liquid discharge position are set on the rotational trajectory 208o. The mixed liquid suction positions correspond to, for example, intersections between the rotational trajectory 208o and trajectories of movement corresponding to the circumferences on which the first reaction containers 201c of the first disposing unit 201 are arranged. The mixed liquid discharge position corresponds to, for example, an intersection between the rotational trajectory 208o and a trajectory of movement corresponding to the circumference on which the second reaction containers 202c of the second disposing unit 202 are arranged.

In addition, in accordance with the vertical movement of the transfer arm 208, the transfer probe vertically moves immediately above one of the opening portions of the first reaction containers 201c of the first disposing unit 201, the positions immediately above these opening portions corresponding to the mixed liquid suction positions. Further, in accordance with the vertical movement of the transfer arm 208, the transfer probe vertically moves immediately above the opening portion of the second reaction container 202c held in the second disposing unit 202, the position immediately above this opening portion corresponding to the mixed liquid discharge position.

Additionally, in accordance with the control of the control circuit 9, the transfer probe sucks the first mixed liquid including the sample and the first reagent from the first reaction container 201c that is positioned immediately below one of the mixed liquid suction positions. Further, in accordance with the control of the control circuit 9, the transfer probe discharges the sucked first mixed liquid into the second reaction container 202c that is located immediately below the mixed liquid discharge position. The transfer probe performs this serial dispensing operation of suction and discharge, for example, once in one cycle.

The second reagent dispensing arm 209 is provided, for example, within the circumference of the second disposing unit 202. The second reagent dispensing arm 209 is provided to be capable of moving up and down in the vertical direction and rotating in the horizontal direction in accordance with the control of the control circuit 9. The second reagent dispensing arm 209 holds a second reagent dispensing probe at a distal end thereof.

The second reagent dispensing probe rotates along an arcuate rotational trajectory 209o in accordance with the rotation of the second reagent dispensing arm 209. A second reagent suction position and a second reagent discharge position are set on the rotational trajectory 209o. The second reagent suction position corresponds to, for example, an intersection between the rotational trajectory 209o and a trajectory of movement of opening portions of the second reagent containers 205c arranged annularly on the reagent rack of the second reagent storage 205. The second reagent discharge position corresponds to, for example, an intersection between the rotational trajectory 209o and a trajectory of movement corresponding to the circumference on which the second reaction containers 202c of the second disposing unit 202 are arranged.

In addition, in accordance with the vertical movement of the second reagent dispensing arm 209, the second reagent dispensing probe vertically moves immediately above the opening portion of the second reagent container 205c held in the second reagent storage 205, the position immediately above this opening portion corresponding to the second reagent suction position. Further, in accordance with the vertical movement of the second reagent dispensing arm 209, the second reagent dispensing probe vertically moves immediately above the opening portion of the second reaction container 202c held in the second disposing unit 202, the position immediately above this opening portion corresponding to the second reagent discharge position.

Additionally, in accordance with the control of the control circuit 9, the second reagent dispensing probe sucks the second reagent from the second reagent container 205c that is positioned immediately below the second reagent suction position. Further, in accordance with the control of the control circuit 9, the second reagent dispensing probe discharges the sucked second reagent into the second reaction container 202c that contains the first mixed liquid and is located immediately below the second reagent discharge position. The second reagent dispensing probe performs this serial dispensing operation of suction and discharge, for example, once in one cycle.

The photometric unit 210 optically measures a predetermined component in the mixed liquid of the sample and the reagent contained in the second reaction container 202c. The photometric unit 210 includes a light source and a photodetector. The photometric unit 210 emits light from the light source in accordance with the control of the control circuit 9. The irradiated light is incident from a first side wall of the second reaction container 202c and is emitted from a second side wall facing the first side wall. The photometric unit 210 detects the light emitted from the second reaction container 202c by the photodetector.

Specifically, for example, the photodetector detects light that has passed through the mixed liquid of the standard sample and the reagent in the second reaction container 202c, and generates standard data represented by absorbance or the like, based on the intensity of the detected light. Further, the photodetector detects light that has passed through the mixed liquid of the sample to be examined and the reagent in the second reaction container 202c, and generates examination data represented by absorbance or the like, based on the intensity of the detected light. The photometric unit 210 outputs the generated standard data and examination data to the analysis circuit 3. Aside from the absorbance, the photodetector may detect various kinds of light by a reaction system. For example, the photodetector may detect scattered light scattered by the mixed liquid, or fluorescence derived from luminescence of a component of the mixed liquid.

The cleaning unit 211 cleans the inside of the second reaction container 202c in which the measurement of the mixed liquid has been completed in the photometric unit 210. This cleaning unit 211 includes a cleaning liquid supply pump (not illustrated) for supplying a cleaning liquid for cleaning the second reaction container 202c. Further, the cleaning unit 211 includes a cleaning nozzle (not illustrated) that discharges the cleaning liquid, which is supplied from the cleaning liquid supply pump, into the second reaction container 202c, and sucks each liquid of the mixed liquid and the cleaning liquid in the second reaction container 202c.

Note that the analysis mechanism 2 may include an electrode unit that measures an electrolyte concentration of the mixed liquid including the sample and reagent contained in the second reaction container 202c, and a stirring unit that stirs the first mixed liquid and the second mixed liquid contained in the second reaction container 202c.

In brief outline, the automatic analyzing apparatus 1 according to the first embodiment includes the first disposing unit 201 in which a plurality of first reaction containers 201c are arranged and a sample and a first reagent are dispensed in the first reaction containers 201c, and the second disposing unit 202 in which a plurality of second reaction containers 202c are arranged along a circumferential direction and a second reagent is dispensed in the second reaction containers 202c that contain a first mixed liquid including the sample and the first reagent. In addition, the automatic analyzing apparatus 1 according to the first embodiment may include the first reagent storage 204 that stores a plurality of first reagent containers 204c that contain the first reagent, and the second reagent storage 205 that stores a plurality of second reagent containers 205c that contain the second reagent. Further, the automatic analyzing apparatus 1 according to the first embodiment may include the transfer probe that sucks the first mixed liquid contained in the first reaction containers 201c in the first disposing unit 201, and discharges the first mixed liquid into the second reaction container 202c that is blank in the second disposing unit 202.

Next, the functions of the control circuit 9 according to the first embodiment are described in detail. For example, by executing a control program, the control circuit 9 includes a system control function 91 and a dispensing control function 92. In the first embodiment, the case is described in which the system control function 91 and the dispensing control function 92 are implemented by a single processor, but the embodiment is not limited to this. For example, a control circuit may be constituted by combining a plurality of independent processors, and the system control function 91 and the dispensing control function 92 may be implemented by the respective processors executing the control program.

The control circuit 9 comprehensively controls, by the system control function 91, the respective parts of the automatic analyzing apparatus 1, for example, based on input information that is input from the input interface 5. Specifically, the control circuit 9 drives the drive mechanism 4 and controls the respective parts of the analysis mechanism 2.

To be more specific, the control circuit 9 controls the operation of the first disposing unit 201, the operation of the second disposing unit 202, the operation of the reagent rack provided in the first reagent storage 204, the operation of the reagent rack provided in the second reagent storage 205, the operation of the sample dispensing probe, the operation of the first reagent dispensing probe, the operation of the transfer probe, and the operation of the second reagent dispensing probe.

In addition, the control circuit 9 executes a function relating to an analysis control process in accordance with the control program that is read out. This function is, for example, the dispensing control function 92. Note that the dispensing control function 92 may include a partial function of the system control function 91.

The dispensing control function 92 is, for example, a function of controlling the respective parts in order to execute an analysis operation according to the first embodiment. The analysis operation according to the first embodiment is different from a conventional analysis operation. In the conventional analysis operation, for example, a first mixed liquid including a sample and a first reagent is made to stand by for a predetermined time in a reaction container of a reaction ring that corresponds to the second disposing unit 202, and, after the passage of the predetermined time, a second reagent is dispensed in the reaction container in which the first mixed liquid is contained, and then measurement is started. In other words, in the conventional analysis operation, the first mixed liquid needs to be made to stand by for the predetermined time in the second disposing unit 202. On the other hand, in the analysis operation according to the first embodiment, for example, the first mixed liquid including the sample and the first reagent is made to stand by for a predetermined time in the first reaction container 201c of the first disposing unit 201, and, after the passage of the predetermined time, the first mixed liquid is dispensed in the second reaction container 202c of the second dispensing unit 202. Further, after the second reagent is dispensed in the second reaction container 202c in which the first mixed liquid is contained, measurement is started. In this manner, the analysis operation according to the first embodiment is different from the conventional analysis operation, and the first mixed liquid does not need to be made to stand by for the predetermined time in the second disposing unit 202.

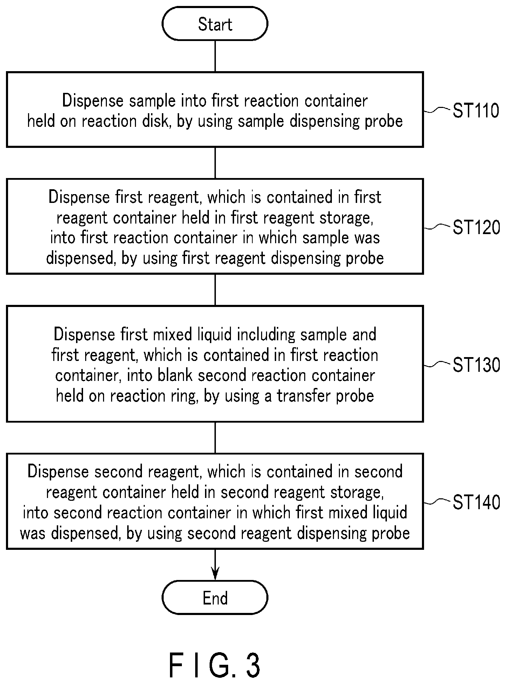

FIG. 3 is a flowchart illustrating an example of the analysis operation according to the first embodiment. The flowchart of FIG. 3 starts, for example, by the operator executing the program of the analysis control process. Note that in the description of the present flowchart, the phrase "according to the control of the control circuit 9" in a case where the control circuit 9 controls the respective components is omitted. In addition, in the description of the present flowchart, the first disposing unit 201 is referred to as "reaction disk", and the second disposing unit 202 is referred to as "reaction ring".

### (Step ST110)

Upon starting the analysis control process, the control circuit 9 executes the dispensing control function 92. Upon executing the dispensing control function 92, the control circuit 9 dispenses a sample in the first reaction container held on the reaction disk, by using the sample dispensing probe. Specifically, the sample dispensing probe sucks the sample from the sample container 203c, and discharges the sucked sample into the first reaction container 201c that is empty (blank).

### (Step ST120)

After dispensing the sample in the blank first reaction container, the control circuit 9 dispenses, by using the first reagent dispensing probe, the first reagent, which is contained in the first reagent container held in the first reagent storage, into the first reaction container in which the sample is dispensed. Specifically, the first reagent dispensing probe sucks the first reagent from the first reagent container 204c of the first reagent storage 204, and discharges the sucked first reagent into the first reaction container 201c in which the sample is contained.

Note that after the first reagent is dispensed in the first reaction container in which the sample is contained, the control circuit 9 may retain the first mixed liquid including the sample and the first reagent in the first reaction container, and may cause the first mixed liquid to stand by for a predetermined time. The predetermined time may vary depending on examination items, or may be discretionarily determined. For example, in the case of an examination item, in connection with which the importance of photometric information from the dispensing of the first reagent to the dispensing of the second reagent is not high, the control circuit 9 may cause the first mixed liquid to stand by in the first reaction container over a discretionary time until the completion of the reaction by the first reagent. In addition, for example, in the case of an examination item, in connection with which the first reagent is used as a buffer liquid, since a reaction by the first reagent does not occur, the control circuit 9 may shorten the standby time from the dispensing of the first reagent to the dispensing of the second reagent.

### (Step ST130)

After the first reagent is dispensed in the first reaction container in which the sample is contained, the control circuit 9 dispenses, by using the transfer probe, the first mixed liquid including the sample and the first reagent, which is contained in the first reaction container, into the blank second reaction container held on the reaction ring. Specifically, the transfer probe sucks the first mixed liquid from the first reaction container 201c in which the first mixed liquid including the sample and the first reagent is contained, and discharges the sucked first mixed liquid into the blank second reaction container 202c. In other words, the transfer probe transfers the first mixed liquid from the first reaction container 201c into the second reaction container 202c.

Note that after the first mixed liquid is transferred from the first reaction container into the second reaction container, the control circuit 9 may optically measure, by the photometric unit 210, a predetermined component in the first mixed liquid. Thereby, the control circuit 9 can acquire data serving as a reference before putting the second reagent in the first mixed liquid (this data may be referred to as "blank data").

### (Step ST140)

After the first mixed liquid is transferred from the first reaction container to the second reaction container, the control circuit 9 dispenses the second reagent, which is contained in the second reagent container held in the second reagent storage, into the second reaction container in which the first mixed liquid is dispensed, by using the second reagent dispensing probe. Specifically, the second reagent dispensing probe sucks the second reagent from the second reagent container 205c of the second reagent storage 205, and discharges the sucked second reagent into the second reaction container 202c in which the first mixed liquid is contained.

After the second reagent is dispensed in the second reaction container in which the first mixed liquid is contained, the control circuit 9 causes the photometric unit 210 to optically measure a predetermined component in the second mixed liquid including the first mixed liquid and the second reagent. Then, the control circuit 9 causes the cleaning unit 211 to clean the inside of the second reaction container, with respect to which the measurement of the second mixed liquid is completed. After step ST140, the process of the flowchart of FIG. 3 ends.

As has been described above, the automatic analyzing apparatus according to the first embodiment includes the first disposing unit in which a plurality of first reaction containers are arranged and a sample and a first reagent are dispensed in the first reaction containers, and the second disposing unit in which a plurality of second reaction containers are arranged along a circumferential direction and a second reagent is dispensed in the second reaction containers that contain a first mixed liquid including the sample and the first reagent.

Accordingly, in the automatic analyzing apparatus according to the first embodiment, by dividing a region where the first reagent is dispensed (i.e., the first disposing unit) and a region where the second reagent is dispensed (i.e., the second disposing unit), the first disposing unit can be set in the standby state during the standby time from the dispensing of the first reagent to the dispensing of the second reagent. In addition, since the first mixed liquid including the sample and the first reagent can be set in the standby state in the first disposing unit during the standby time, the automatic analyzing apparatus according to the first embodiment can increase the processing amount of an examination without increasing the size of the second disposing unit. In other words, the automatic analyzing apparatus according to the first embodiment can achieve the improvement of the throughput of the examination and the reduction in size of the main body of the apparatus.

Additionally, the automatic analyzing apparatus according to the first embodiment may further include processing circuitry that dispenses the sample and the first reagent in the first reaction container, and dispenses the second reagent in the second reaction container in which the first mixed liquid is contained. Further, the automatic analyzing apparatus according to the first embodiment may dispense, by the processing circuitry, the first mixed liquid which is contained in the first reaction container, into the second reaction container that is blank. Besides, the automatic analyzing apparatus according to the first embodiment may further include a first reagent storage that stores a plurality of first reagent containers that contain the first reagent, and a second reagent storage that stores a plurality of second reagent containers that contain the second reagent, and may dispense, by the processing circuitry, the first reagent, which is contained in the first reagent container, into the first reaction container, and dispense the second reagent, which is contained in the second reagent container, into the second reaction container in which the first mixed liquid is contained.

Additionally, the automatic analyzing apparatus according to the first embodiment may further include the dispensing probe that sucks the first mixed liquid contained in the first reaction containers in the first disposing unit, and discharges the first mixed liquid into the second reaction container that is blank in the second disposing unit.

### (Applied Example of First Embodiment)

The first disposing unit 201 may arrange the first reaction containers 201c in any manner. For example, the first disposing unit 201 may arrange the first reaction containers 201c in a circumferential direction (for example, in one circumferential direction). For example, the first disposing unit 201 may arrange and hold the first reaction containers 201c in a lattice fashion. In any case, since the first mixed liquid including the sample and the first reagent can be made to stand by in the first disposing unit 201, the automatic analyzing apparatus according to the applied example of the first embodiment can increase the processing amount of an examination without increasing the size of the second disposing unit 202.

Furthermore, at least one of the sample dispensing arm 206, the first reagent dispensing arm 207, the transfer arm 208 and the second reagent dispensing arm 209 may be constituted by a multiaxial arm. In the case of using the multiaxial arm, the automatic analyzing apparatus according to the applied example of the first embodiment can increase the degree of freedom of arrangement than a single-axial arm.

### (Second Embodiment)

The automatic analyzing apparatus according to the first embodiment is configured to transfer the mixed liquid (first mixed liquid) of the sample and the first reagent from the reaction disk (first disposing unit) to the reaction ring (second disposing unit). On the other hand, an automatic analyzing apparatus according to a second embodiment is configured to transfer the first reaction container, in which the first mixed liquid is contained, from the first disposing unit to the second disposing unit.

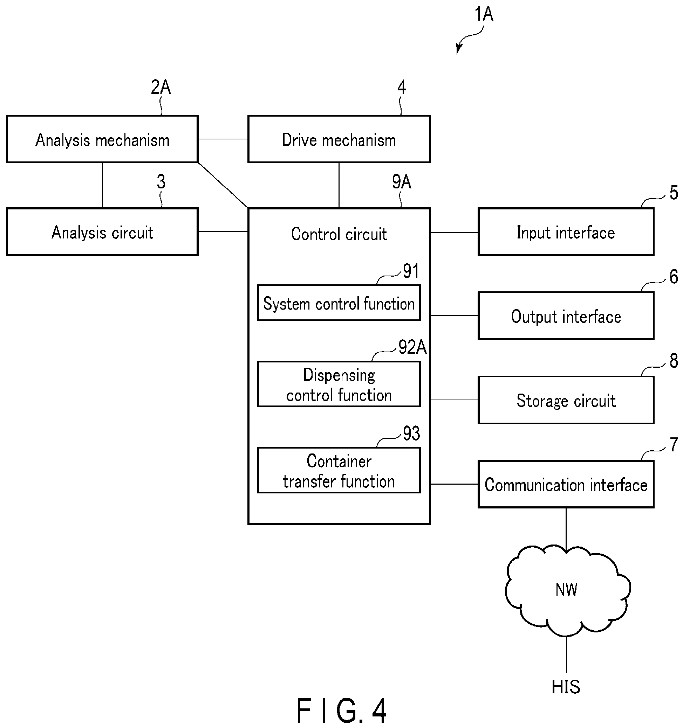

FIG. 4 is a block diagram exemplarily illustrating a functional configuration of the automatic analyzing apparatus according to the second embodiment. An automatic analyzing apparatus 1A illustrated in FIG. 4 includes an analysis mechanism 2A, an analysis circuit 3, a drive mechanism 4, an input interface 5, an output interface 6, a communication interface 7, a storage circuit 8, and a control circuit 9A (processing circuitry).

Unlike the analysis mechanism 2 of the first embodiment, the analysis mechanism 2A is configured to transfer the first reaction container, in which the first mixed liquid is contained, from the first disposing unit to the second disposing unit. Unlike the control circuit 9 of the first embodiment, the control circuit 9A is configured to include a system control function 91, a dispensing control function 92A and a container transfer function 93 by executing the control program.

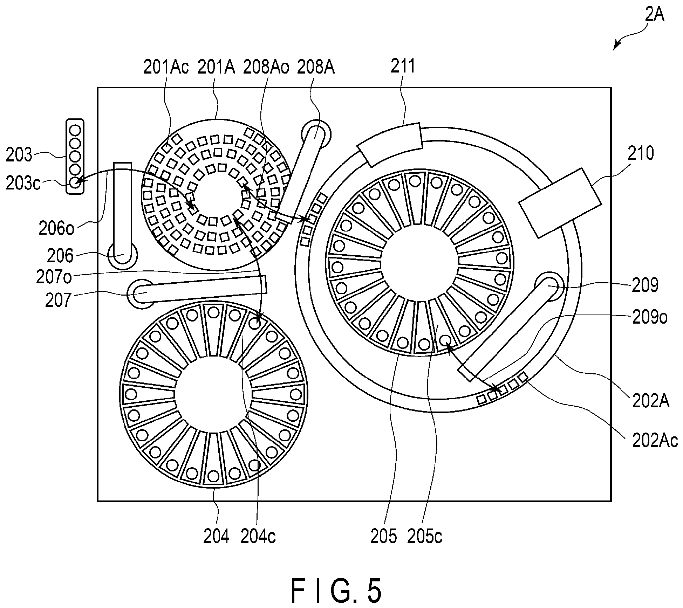

FIG. 5 is a schematic diagram exemplarily illustrating a configuration of the analysis mechanism of FIG. 4. The analysis mechanism 2A illustrated in FIG. 5 includes a first disposing unit 201A, a second disposing unit 202A, a sample rack 203, a first reagent storage 204, a second reagent storage 205, a sample dispensing arm 206, a first reagent dispensing arm 207, a transfer arm 208A (transfer arm), a second reagent dispensing arm 209, a photometric unit 210, and a cleaning unit 211. Hereinafter, structures different from the first embodiment are described.

The first disposing unit 201A disposes and holds a plurality of first reaction containers 201Ac. For example, the first disposing unit 201A disposes and holds the first reaction containers 201Ac along directions of a plurality of circumferences. The plurality of circumferences mean circumferences having different diameters. In FIG. 5, four circumferences having different diameters are illustrated. The first disposing unit 201A conveys the first reaction containers 201Ac along a predetermined path. Specifically, the first disposing unit 201A rotates and stops at an arbitrary timing in accordance the control of the control circuit 9A. The first reaction containers 201Ac are formed of glass, polypropylene, or an acrylic. Note that a plurality of sample discharge positions, a plurality of first reagent discharge positions and a plurality of first transfer positions are set at a plurality of locations on the first disposing unit 201A. The "first disposing unit 201A" may also be referred to as "reaction disk".

The second disposing unit 202A disposes and holds a plurality of second reaction containers 202Ac along a circumferential direction. The second disposing unit 202A conveys the second reaction containers 202Ac along a predetermined path. Specifically, the second disposing unit 202A alternately rotates and stops with a predetermined time interval (hereinafter, referred to as "one cycle") in accordance with the control of the control circuit 9A. The second reaction containers 202Ac are formed of glass, polypropylene, or an acrylic. The shape of the second reaction container 202Ac is identical to the shape of the first reaction container 201Ac. Note that a transfer position, a second reagent discharge position and a plurality of cleaning positions are set at a plurality of locations on the second disposing unit 202A. The "second disposing unit 202A" may also be referred to as "reaction ring".

The transfer arm 208A is provided, for example, between the first disposing unit 201A and the second disposing unit 202A. The transfer arm 208A is provided to be capable of moving up and down in the vertical direction and rotating in the horizontal direction in accordance with the control of the control circuit 9A. A holding portion for holding the reaction container is provided at a distal end of the transfer arm 208A. The holding portion is constituted by a claw or the like for holding a side surface of the reaction container.

The holding portion of the transfer arm 208A rotates along an arcuate rotational trajectory 208Ao in accordance with the rotation of the transfer arm 208A. A plurality of first transfer positions and a second transfer position are set on the rotational trajectory 208Ao. The first transfer positions correspond to, for example, intersections between the rotational trajectory 208Ao and trajectories of movement corresponding to the circumferences on which the first reaction containers 201Ac of the first disposing unit 201A are arranged. The second transfer position corresponds to, for example, an intersection between the rotational trajectory 208Ao and a trajectory of movement corresponding to the circumference on which the second reaction containers 202Ac of the second disposing unit 202A are arranged.

In addition, in accordance with the vertical movement of the transfer arm 208A, the holding portion vertically moves immediately above one of the first reaction containers 201Ac of the first disposing unit 201A, the positions immediately above the first reaction containers 201Ac corresponding to the first transfer positions. Further, in accordance with the vertical movement of the transfer arm 208A, the holding portion vertically moves immediately above the second reaction container 202Ac held in the second disposing unit 202A, the position immediately above the second reaction container 202Ac corresponding to the second transfer position.

Additionally, in accordance with the control of the control circuit 9A, the holding portion holds the first reaction container 201Ac that is positioned immediately below one of the first transfer positions. Further, in accordance with the control of the control circuit 9A, the holding portion sets the held first reaction container 201Ac immediately below the second transfer position. The holding portion performs this serial transfer operation of holding and setting, for example, once in one cycle.

Further, in accordance with the control of the control circuit 9A, the holding portion holds the second reaction container 202Ac that is blank and is positioned immediately below the second transfer position. Further, in accordance with the control of the control circuit 9A, the holding portion sets the held second reaction container 202Ac immediately below one of the first transfer positions. The holding portion performs this serial transfer operation of holding and setting, for example, once in one cycle.

In the above, the operation of holding and setting the reaction container by the holding portion of the transfer arm 208A was described, but this operation may be read as the operation of the transfer arm 208A. Specifically, the transfer arm 208A holds the first reaction container 201Ac that is disposed in the first disposing unit 201A and contains the first mixed liquid, and transfers the first reaction container 201Ac from the first disposing unit 201A to the second disposing unit 202A. In addition, the transfer arm 208A holds the second reaction container 202Ac that is cleaned and disposed in the second disposing unit 202A, and transfers the second reaction container 202Ac from the second disposing unit 202A to the first disposing unit 201A.

In brief outline, the automatic analyzing apparatus 1A according to the second embodiment includes the first disposing unit 201A in which a plurality of first reaction containers 201Ac are arranged and a sample and a first reagent are dispensed in the first reaction containers 201Ac, and the second disposing unit 202A in which a plurality of second reaction containers 202Ac are arranged along a circumferential direction and a second reagent is dispensed in the second reaction containers 202Ac that contain a first mixed liquid including the sample and the first reagent.

In addition, the automatic analyzing apparatus 1A according to the second embodiment may include the transfer arm 208A that holds the first reaction container 201Ac that is disposed in the first disposing unit 201A and contains the first mixed liquid, and transfers the first reaction container 201Ac from the first disposing unit 201A to the second disposing unit 202A. The "first reaction container 201Ac that is transferred" may be read as "second reaction container 202Ac".

Additionally, the automatic analyzing apparatus 1A according to the second embodiment may include the cleaning unit 211 that cleans the second reaction container 202Ac that has been measured, and the transfer arm 208A may transfer the cleaned second reaction container 202Ac from the second disposing unit 202A to the first disposing unit 201A.

Next, the functions of the control circuit 9A according to the second embodiment are described in detail. For example, by executing the control program, the control circuit 9A includes a system control function 91, a dispensing control function 92A and a container transfer function 93. In the second embodiment, the case is described in which the system control function 91, the dispensing control function 92A and the container transfer function 93 are implemented by a single processor, but the embodiment is not limited to this. For example, a control circuit may be constituted by combining a plurality of independent processors, and the system control function 91, the dispensing control function 92A and the container transfer function 93 may be implemented by the respective processors executing the control program. Hereinafter, the functions different from the first embodiment are described.

The control circuit 9A executes a function relating to an analysis control process in accordance with the control program that is read out. This function includes, for example, the dispensing control function 92A and the container transfer function 93. Note that the dispensing control function 92A and the container transfer function 93 may include a partial function of the system control function 91.

The dispensing control function 92A and the container transfer function 93 are, for example, functions of controlling the respective parts in order to execute an analysis operation according to the second embodiment. The analysis operation according to the second embodiment is different from a conventional analysis operation. In the analysis operation according to the second embodiment, for example, the first mixed liquid including the sample and the first reagent is made to stand by for a predetermined time in the first reaction container 201Ac of the first disposing unit 201A, and, after the passage of the predetermined time, the first reaction container 201Ac that contains the first mixed liquid is transferred from the first disposing unit 201A to the second dispensing unit 202A. Further, after the second reagent is dispensed in the transferred first reaction container 201Ac (this may be read as "second reaction container 202Ac"), measurement is started. In this manner, the analysis operation according to the second embodiment is different from the conventional analysis operation, and the first mixed liquid does not need to be made to stand by for the predetermined time in the second disposing unit 202A.

Note that the dispensing control function 92A is different from the dispensing control function 92 of the first embodiment in that the first mixed liquid is not transferred from the first reaction container 201Ac of the first disposing unit 201A to the second reaction container 202Ac of the second disposing unit 202A. In addition, the container transfer function 93 is the function of transferring the first reaction container 201Ac, in which the first mixed liquid is contained, from the first disposing unit 201A to the second disposing unit 202A. Besides, the container transfer function 93 may transfer the transferred first reaction container 201Ac (this may be read as "second reaction container 202Ac") from the second disposing unit 202A to the first disposing unit 201A.

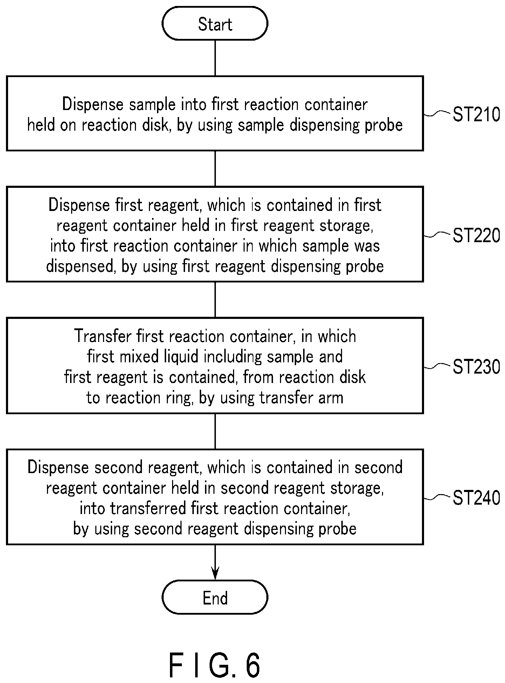

FIG. 6 is a flowchart illustrating an example of the analysis operation according to the second embodiment. The flowchart of FIG. 6 starts, for example, by the operator executing the program of the analysis control process. Note that in the description of the present flowchart, the phrase "according to the control of the control circuit 9A" in a case where the control circuit 9A controls the respective components is omitted. In addition, in the description of the present flowchart, the first disposing unit 201A is referred to as "reaction disk", and the second disposing unit 202A is referred to as "reaction ring".

### (Step ST210)

Upon starting the analysis control process, the control circuit 9A executes the dispensing control function 92A. Upon executing the dispensing control function 92A, the control circuit 9A dispenses a sample in the first reaction container held on the reaction disk, by using the sample dispensing probe. Specifically, the sample dispensing probe sucks the sample from the sample container 203c, and discharges the sucked sample into the first reaction container 201Ac that is blank.

### (Step ST220)

After dispensing the sample in the blank first reaction container, the control circuit 9A dispenses, by using the first reagent dispensing probe, the first reagent, which is contained in the first reagent container held in the first reagent storage, into the first reaction container in which the sample is dispensed. Specifically, the first reagent dispensing probe sucks the first reagent from the first reagent container 204c of the first reagent storage 204, and discharges the sucked first reagent into the first reaction container 201Ac in which the sample is contained.

Note that after the first reagent is dispensed in the first reaction container in which the sample is contained, the control circuit 9A may retain the first mixed liquid including the sample and the first reagent in the first reaction container, and may cause the mixed liquid to stand by for a predetermined time. The predetermined time may vary depending on examination items, or may be discretionarily determined. For example, in the case of an examination item, in connection with which the importance of photometric information from the dispensing of the first reagent to the dispensing of the second reagent is not high, the control circuit 9A may cause the first mixed liquid to stand by in the first reaction container over a discretionary time until the completion of the reaction by the first reagent. In addition, for example, in the case of an examination item, in connection with which the first reagent is used as a buffer liquid, since a reaction by the first reagent does not occur, the control circuit 9A may shorten the standby time from the dispensing of the first reagent to the dispensing of the second reagent.

### (Step ST230)

After the first reagent is dispensed in the first reaction container in which the sample is contained, the control circuit 9A transfers, by using the transfer arm, the first reaction container, in which the first mixed liquid including the sample and the first reagent is contained, from the reaction disk to the reaction ring. Specifically, the transfer arm 208A transfers the first reaction container 201Ac, in which the first mixed liquid is contained, from the first disposing unit 201A to the second disposing unit 202A.

Note that after the first reaction container is transferred from the first disposing unit (reaction disk) to the second disposing unit (reaction ring), the control circuit 9A may optically measure, by the photometric unit 210, a predetermined component in the first mixed liquid. Thereby, the control circuit 9A can acquire data serving as a reference before putting the second reagent in the first mixed liquid.

### (Step ST240)

After the first reaction container is transferred from the reaction disk to the reaction ring, the control circuit 9A dispenses the second reagent, which is contained in the second reagent container held in the second reagent storage, into the transferred first reaction container, by using the second reagent dispensing probe. Specifically, the second reagent dispensing probe sucks the second reagent from the second reagent container 205c of the second reagent storage 205, and discharges the sucked second reagent into the transferred first reaction container 201Ac in which the first mixed liquid is contained (the transferred first reaction container 201Ac may be read as "second reaction container 202Ac").

After the second reagent is dispensed in the second reaction container in which the first mixed liquid is contained, the control circuit 9A causes the photometric unit 210 to optically measure a predetermined component in the second mixed liquid including the first mixed liquid and the second reagent. Then, the control circuit 9A causes the cleaning unit 211 to clean the inside of the second reaction container, with respect to which the measurement of the second mixed liquid is completed. Further, the control circuit 9A may transfer, by the transfer arm 208A, the cleaned second reaction container from the reaction ring to the reaction disk. After step ST240, the process of the flowchart of FIG. 6 ends.

As has been described above, the automatic analyzing apparatus according to the second embodiment includes the first disposing unit in which a plurality of first reaction containers are arranged and a sample and a first reagent are dispensed in the first reaction containers, and the second disposing unit in which a plurality of second reaction containers are arranged along a circumferential direction and a second reagent is dispensed in the second reaction containers that contain a first mixed liquid including the sample and the first reagent.

In addition, the automatic analyzing apparatus according to the second embodiment may further include the transfer arm that holds the first reaction container that is disposed in the first disposing unit and contains the first mixed liquid, and transfers the first reaction container from the first disposing unit to the second disposing unit, and the second reaction container may be the transferred first reaction container.

Additionally, the automatic analyzing apparatus according to the second embodiment may further include the cleaning unit that cleans the second reaction container that has been measured, and the transfer arm may transfer the cleaned second reaction container from the second disposing unit to the first disposing unit.

Therefore, like the automatic analyzing apparatus according to the first embodiment, the automatic analyzing apparatus according to the second embodiment can achieve the improvement of the throughput of the examination and the reduction in size of the main body of the apparatus.

Note that the first reaction container 201Ac and the second reaction container 202Ac may have different shapes, if no problem arises in connection with the transfer of the reaction container between the first disposing unit 201A and the second disposing unit 202A by the transfer arm 208A.

### (Third Embodiment)

The automatic analyzing apparatus according to the second embodiment is configured such that the reaction container that has been measured is cleaned and can thereby be reused. On the other hand, an automatic analyzing apparatus according to a third embodiment is configured to recover the reaction container that has been measured.

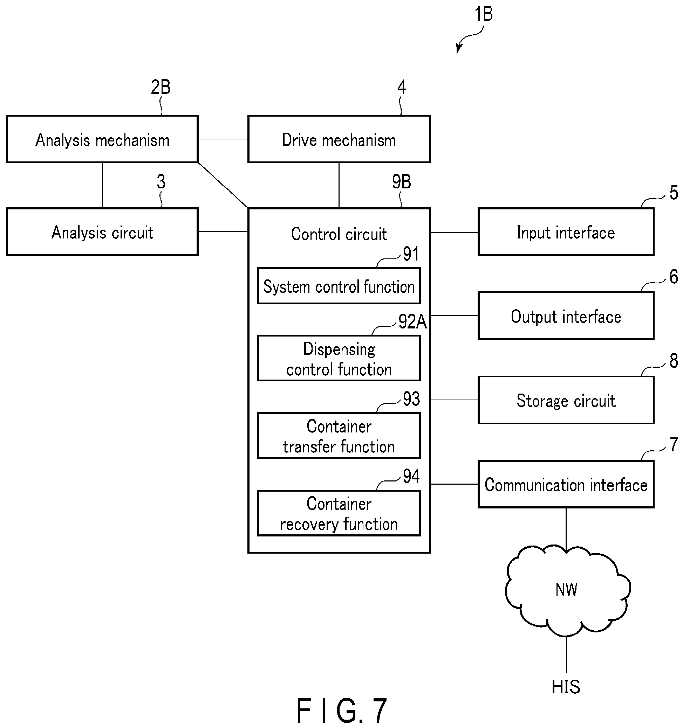

FIG. 7 is a block diagram exemplarily illustrating a functional configuration of the automatic analyzing apparatus according to the third embodiment. An automatic analyzing apparatus 1B illustrated in FIG. 7 includes an analysis mechanism 2B, an analysis circuit 3, a drive mechanism 4, an input interface 5, an output interface 6, a communication interface 7, a storage circuit 8, and a control circuit 9B (processing circuitry).

Unlike the analysis mechanism 2A of the second embodiment, the analysis mechanism 2B is configured to recover the reaction container that has been measured. Unlike the control circuit 9A of the second embodiment, the control circuit 9B is configured to include a system control function 91, a dispensing control function 92A, a container transfer function 93 and a container recovery function 94 by executing the control program.

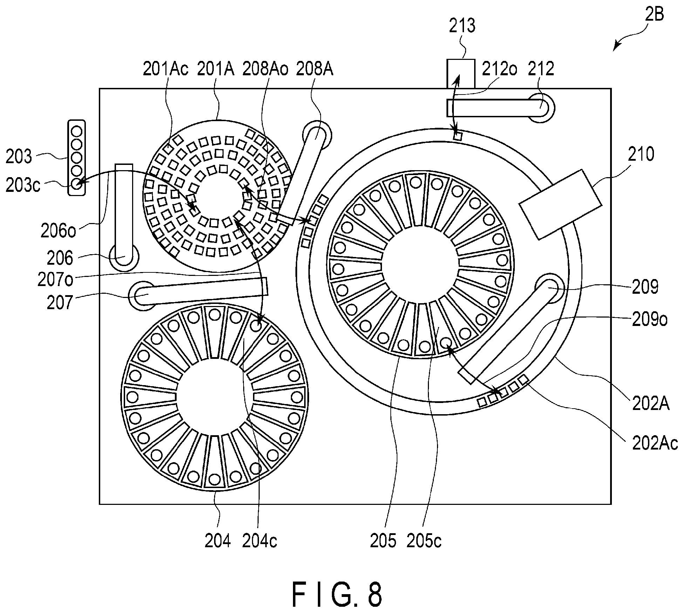

FIG. 8 is a schematic diagram exemplarily illustrating a configuration of the analysis mechanism of FIG. 7. The analysis mechanism 2B illustrated in FIG. 8 includes a first disposing unit 201A, a second disposing unit 202A, a sample rack 203, a first reagent storage 204, a second reagent storage 205, a sample dispensing arm 206, a first reagent dispensing arm 207, a transfer arm 208A (transfer arm), a second reagent dispensing arm 209, a photometric unit 210, a recovery arm 212, and a recovery unit 213. Hereinafter, structures different from the second embodiment are described.

The recovery arm 212 is provided, for example, outside the circumference of the second disposing unit 202A. The recovery arm 212 is provided to be capable of moving up and down in the vertical direction and rotating in the horizontal direction in accordance with the control of the control circuit 9B. A holding portion for holding the reaction container is provided at a distal end of the recovery arm 212. The holding portion is constituted by a claw or the like for holding a side surface of the reaction container.

The holding portion of the recovery arm 212 rotates along an arcuate rotational trajectory 212o in accordance with the rotation of the recovery arm 212. An acquisition position and a recovery position are set on the rotational trajectory 212o. The acquisition position corresponds to, for example, an intersection between the rotational trajectory 212o and a trajectory of movement corresponding to the circumference on which the second reaction containers 202Ac of the second disposing unit 202A are arranged. The recovery position is located immediately above the recovery unit 213.

In addition, in accordance with the vertical movement of the recovery arm 212, the holding portion vertically moves immediately above the second reaction container 202Ac held in the second disposing unit 202A, the position immediately above the second reaction container 202Ac corresponding to the acquisition position. Further, in accordance with the vertical movement of the recovery arm 212, the holding portion may vertically move immediately above the recovery unit 213, the position immediately above the recovery unit 213 corresponding to the recovery position.

Additionally, in accordance with the control of the control circuit 9B, the holding portion holds the second reaction container 202Ac that is positioned immediately below the acquisition position. Further, in accordance with the control of the control circuit 9B, the holding portion releases the held second reaction container 202Ac at the recovery position. The holding portion performs this serial recovery operation of holding and releasing, for example, once in one cycle.

The recovery unit 213 holds the second reaction container 202Ac that has been measured. Specifically, the recovery unit 213 is, for example, a container for temporary storage for recovering the second reaction container 202Ac that has been measured. The recovered reaction container may be discarded or reused. Besides, the recovery unit 213 may be provided to be detachable from the analysis mechanism 2B.

In brief outline, the automatic analyzing apparatus according to the third embodiment includes the first disposing unit 201A in which a plurality of first reaction containers 201Ac are arranged and a sample and a first reagent are dispensed in the first reaction containers 201Ac, and the second disposing unit 202A in which a plurality of second reaction containers 202Ac are arranged along a circumferential direction and a second reagent is dispensed in the second reaction containers 202Ac that contain a first mixed liquid including the sample and the first reagent.

In addition, the automatic analyzing apparatus according to the third embodiment includes the transfer arm 208A that holds the first reaction container 201Ac that is disposed in the first disposing unit 201A and contains the first mixed liquid, and transfers the first reaction container 201Ac from the first disposing unit 201A to the second disposing unit 202A. The "first reaction container 201Ac that is transferred" may be read as "second reaction container 202Ac".

Additionally, the automatic analyzing apparatus according to the third embodiment includes the recovery arm that acquires the second reaction container 202Ac that has been measured. Further, the automatic analyzing apparatus according to the third embodiment includes the recovery unit that recovers the acquired second reaction container 202Ac.

Next, the functions of the control circuit 9B according to the third embodiment are described in detail. For example, by executing the control program, the control circuit 9B includes a system control function 91, a dispensing control function 92A, a container transfer function 93, and a container recovery function 94. In the third embodiment, the case is described in which the system control function 91, the dispensing control function 92A, the container transfer function 93 and the container recovery function 94 are implemented by a single processor, but the embodiment is not limited to this. For example, a control circuit may be constituted by combining a plurality of independent processors, and the system control function 91, the dispensing control function 92A, the container transfer function 93 and the container recovery function 94 may be implemented by the respective processors executing the control program. Hereinafter, the functions different from the first embodiment and the second embodiment are described.

The control circuit 9B executes a function relating to an analysis control process in accordance with the control program that is read out. This function includes, for example, the dispensing control function 92A, the container transfer function 93 and the container recovery function 94. Note that the dispensing control function 92A, the container transfer function 93 and the container recovery function 94 may include a partial function of the system control function 91.

The dispensing control function 92A, the container transfer function 93 and the container recovery function 94 are, for example, functions of controlling the respective parts in order to execute an analysis operation according to the third embodiment. The analysis operation according to the third embodiment is different from a conventional analysis operation. In the analysis operation according to the third embodiment, for example, the first mixed liquid including the sample and the first reagent is made to stand by for a predetermined time in the first reaction container 201Ac of the first disposing unit 201A, and, after the passage of the predetermined time, the first reaction container 201Ac that contains the first mixed liquid is transferred from the first disposing unit 201A to the second dispensing unit 202A. Further, after the second reagent is dispensed in the transferred first reaction container 201Ac (this may be read as "second reaction container 202Ac"), measurement is started. Moreover, in the analysis operation according to the third embodiment, the second reaction container 202Ac that has been measured is recovered from the second disposing unit 202A. In this manner, the analysis operation according to the third embodiment is different from the conventional analysis operation, and the first mixed liquid does not need to be made to stand by for the predetermined time in the second disposing unit 202A.

Note that the container recovery function 94 is a function of recovering the second reaction container 202Ac that has been measured from the second disposing unit 202A.

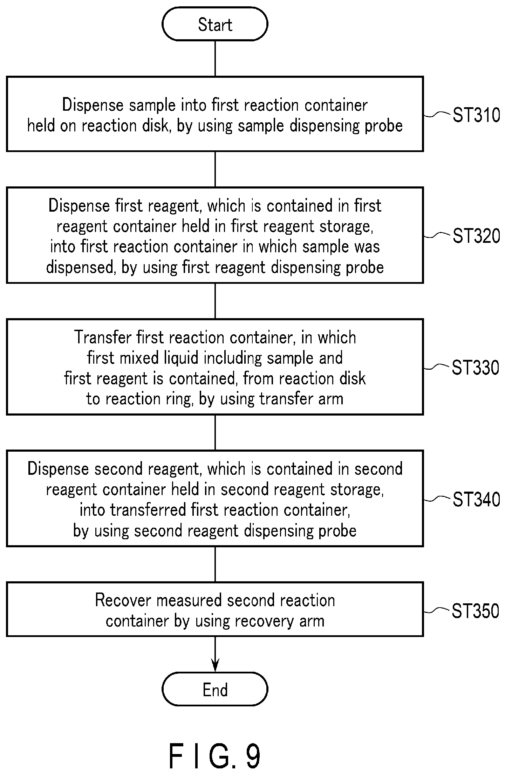

FIG. 9 is a flowchart illustrating an example of the analysis operation according to the third embodiment. The flowchart of FIG. 9 starts, for example, by the operator executing the program of the analysis control process. Note that in the description of the present flowchart, the phrase "according to the control of the control circuit 9B" in a case where the control circuit 9B controls the respective components is omitted. In addition, in the description of the present flowchart, the first disposing unit 201A is referred to as "reaction disk", and the second disposing unit 202A is referred to as "reaction ring". Since step ST310, step ST320 and step ST330 of the flowchart of FIG. 9 are substantially the same as step ST210, step ST220 and step ST230 of FIG. 6 in the second embodiment, the description thereof is omitted.

### (Step ST340)

After the first reaction container is transferred from the reaction disk to the reaction ring, the control circuit 9B dispenses the second reagent, which is contained in the second reagent container held in the second reagent storage, into the transferred first reaction container, by using the second reagent dispensing probe. Specifically, the second reagent dispensing probe sucks the second reagent from the second reagent container 205c of the second reagent storage 205, and discharges the sucked second reagent into the transferred first reaction container 201Ac in which the first mixed liquid is contained (the transferred first reaction container 201Ac may be read as "second reaction container 202Ac").

After the second reagent is dispensed in the second reaction container in which the first mixed liquid is contained, the control circuit 9B causes the photometric unit 210 to optically measure a predetermined component in the second mixed liquid including the first mixed liquid and the second reagent.

### (Step ST350)

After the measurement by the photometric unit is completed, the control circuit 9B recovers the second reaction container that has been measured, by using the recovery arm. Specifically, the recovery arm 212 transfers the second reaction container 202Ac that has been measured from the second disposing unit 202A to the recovery unit 213. After step ST350, the process of the flowchart of FIG. 9 ends.

As has been described above, the automatic analyzing apparatus according to the third embodiment includes the first disposing unit in which a plurality of first reaction containers are arranged and a sample and a first reagent are dispensed in the first reaction containers, and the second disposing unit in which a plurality of second reaction containers are arranged along a circumferential direction and a second reagent is dispensed in the second reaction containers that contain a first mixed liquid including the sample and the first reagent.

In addition, the automatic analyzing apparatus according to the third embodiment may further include the transfer arm that holds the first reaction container that is disposed in the first disposing unit and contains the first mixed liquid, and transfers the first reaction container from the first disposing unit to the second disposing unit, and the second reaction container may be the transferred first reaction container.

Additionally, the automatic analyzing apparatus according to the third embodiment may further include the recovery arm that acquires the second reaction container that has been measured. Besides, the automatic analyzing apparatus according to the third embodiment may further include the recovery unit that recovers the acquired second reaction container.

Therefore, like the automatic analyzing apparatus according to the first embodiment, the automatic analyzing apparatus according to the third embodiment can achieve the improvement of the throughput of the examination and the reduction in size of the main body of the apparatus.

### (Other Embodiments)

The automatic analyzing apparatus according to each of the above-described embodiments is configured to include two reagent storages. On the other hand, an automatic analyzing apparatus according to another embodiment may be configured to include one reagent storage. For example, the automatic analyzing apparatus according to this another embodiment may be configured to include one reagent storage that stores a plurality of first reagent containers each containing a first reagent, and a plurality of second reagent containers each containing a second reagent. In addition, the automatic analyzing apparatus according to this another embodiment may dispense, by the control circuit, the first reagent, which is contained in the first reagent container, into the first reaction container, and may dispense the second reagent, which is contained in the second reagent container, into the second reaction container in which the first mixed liquid is contained. Thereby, in the case of adopting the configuration in which one reagent storage is provided in the inside of the reaction ring, the automatic analyzing apparatus according to this another embodiment can further reduce the area of installation of the main body of the apparatus.

The automatic analyzing apparatus according to each of the above-described embodiments is configured such that the reaction ring and the reagent storage are disposed on an identical plane. However, as described above, the position of the reagent storage is not particularly limited. An automatic analyzing apparatus according to another embodiment may be configured such that the reaction ring and the reagent storage are disposed at different heights. For example, in the automatic analyzing apparatus according to this another embodiment, the reaction disk may be disposed below the reagent storage by being spaced apart from the reagent storage. In addition, in a case where the analysis mechanism is viewed from above, at least a part of the range of installation of the reaction disk may overlap the range of installation of the reagent storage. Thereby, the automatic analyzing apparatus according to this another embodiment can further reduce the area of installation of the main body of the apparatus.

According to at least one of the above-described embodiments, the improvement of the throughput of the examination and the reduction in size of the main body of the apparatus can be achieved.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

Regarding the foregoing embodiments, the appendage of the following is disclosed as one aspect and selective features of the invention.

### <Supplementary Note 1>

An automatic analyzing apparatus comprising:
a first disposing unit in which a plurality of first reaction containers are arranged and a sample and a first reagent are dispensed in the first reaction containers; and
a second disposing unit in which a plurality of second reaction containers are arranged along a circumferential direction and a second reagent is dispensed in the second reaction containers that contain a first mixed liquid including the sample and the first reagent.

### <Supplementary Note 2>

The first disposing unit may be configured to dispose the first reaction containers along a circumferential direction.

### <Supplementary Note 3>

The first disposing unit may be configured to dispose the first reaction containers along a plurality of circumferential directions.

### <Supplementary Note 4>

The automatic analyzing apparatus may further comprise processing circuitry configured to dispense the sample and the first reagent in the first reaction container, and to dispense the second reagent in the second reaction container in which the first mixed liquid is contained.

### <Supplementary Note 5>

The processing circuitry may be further configured to dispense the first mixed liquid, which is contained in the first reaction container, into the second reaction container that is blank.

### <Supplementary Note 6>

The automatic analyzing apparatus may further comprise:
a first reagent storage configured to store a plurality of first reagent containers that contain the first reagent; and
a second reagent storage configured to store a plurality of second reagent containers that contain the second reagent.

The processing circuitry may be further configured to:
dispense the first reagent, which is contained in the first reagent container, into the first reaction container, and
dispense the second reagent, which is contained in the second reagent container, into the second reaction container in which the first mixed liquid is contained.

### <Supplementary Note 7>

The automatic analyzing apparatus may further comprise a reagent storage configured to store a plurality of first reagent containers each containing the first reagent, and a plurality of second reagent containers each containing the second reagent.

The processing circuitry may be further configured to:
dispense the first reagent, which is contained in the first reagent container, into the first reaction container, and
dispense the second reagent, which is contained in the second reagent container, into the second reaction container in which the first mixed liquid is contained.

### <Supplementary Note 8>

The first reaction container may have a shape that is different from a shape of the second reaction container.

### <Supplementary Note 9>

The automatic analyzing apparatus may further comprise a dispensing probe configured to suck the first mixed liquid contained in the first reaction container in the first disposing unit, and to discharge the first mixed liquid into the second reaction container that is blank in the second disposing unit.

### <Supplementary Note 10>

The automatic analyzing apparatus may further comprise a dispensing arm that includes the dispensing probe and is constituted by a multiaxial arm.

### <Supplementary Note 11>

The automatic analyzing apparatus may further comprise processing circuitry configured to transfer the first reaction container, in which the first mixed liquid is contained, from the first disposing unit to the second disposing unit.

The second reaction container may be the transferred first reaction container.

### <Supplementary Note 12>

The processing circuitry may be further configured to clean the second reaction container that has been measured, and to transfer the cleaned second reaction container from the second disposing unit to the first disposing unit.

### <Supplementary Note 13>

The processing circuitry may be further configured to acquire the second reaction container that has been measured.

### <Supplementary Note 14>

The automatic analyzing apparatus may further comprise a transfer arm configured to hold the first reaction container that is disposed in the first disposing unit and contains the first mixed liquid, and to transfer the first reaction container from the first disposing unit to the second disposing unit.

The second reaction container may be the transferred first reaction container.

### <Supplementary Note 15>

The automatic analyzing apparatus may further comprise a cleaning unit configured to clean the second reaction container that has been measured.

The transfer arm may be configured to transfer the cleaned second reaction container from the second disposing unit to the first disposing unit.

### <Supplementary Note 16>

The automatic analyzing apparatus may further comprise a recovery arm configured to acquire the second reaction container that has been measured.

### <Supplementary Note 17>

The automatic analyzing apparatus may further comprise a recovery unit configured to recover the acquired second reaction container.

### <Supplementary Note 18>

The automatic analyzing apparatus may further comprise a photometric unit provided on a part of a circumference of the second disposing unit, and configured to optically measure a liquid contained in the second reaction container.

### <Supplementary Note 19>

The photometric unit may be configured to optically measure the first mixed liquid contained in the second reaction container.

### <Supplementary Note 20>

The photometric unit may be configured to optically measure a second mixed liquid including the first mixed liquid and the second reagent contained in the second reaction container.

## Claims

1. An automatic analyzing apparatus comprising:
a first disposing unit in which a plurality of first reaction containers are arranged and a sample and a first reagent are dispensed in the first reaction containers; and
a second disposing unit in which a plurality of second reaction containers are arranged along a circumferential direction and a second reagent is dispensed in the second reaction containers that contain a first mixed liquid including the sample and the first reagent.

2. The automatic analyzing apparatus according to claim 1, wherein the first disposing unit is configured to dispose the first reaction containers along a circumferential direction.

3. The automatic analyzing apparatus according to claim 1 or 2, wherein the first disposing unit is configured to dispose the first reaction containers along a plurality of circumferential directions.

4. The automatic analyzing apparatus according to any one of claims 1 to 3, further comprising processing circuitry configured to dispense the sample and the first reagent in the first reaction container, and to dispense the second reagent in the second reaction container in which the first mixed liquid is contained.

5. The automatic analyzing apparatus according to claim 4, wherein the processing circuitry is further configured to dispense the first mixed liquid, which is contained in the first reaction container, into the second reaction container that is blank.

6. The automatic analyzing apparatus according to claim 4 or 5, further comprising:
a first reagent storage configured to store a plurality of first reagent containers that contain the first reagent; and
a second reagent storage configured to store a plurality of second reagent containers that contain the second reagent,
wherein the processing circuitry is further configured to:
dispense the first reagent, which is contained in the first reagent container, into the first reaction container, and
dispense the second reagent, which is contained in the second reagent container, into the second reaction container in which the first mixed liquid is contained.

7. The automatic analyzing apparatus according to any one of claims 4 to 6, further comprising a reagent storage configured to store a plurality of first reagent containers each containing the first reagent, and a plurality of second reagent containers each containing the second reagent,
wherein the processing circuitry is further configured to:
dispense the first reagent, which is contained in the first reagent container, into the first reaction container, and
dispense the second reagent, which is contained in the second reagent container, into the second reaction container in which the first mixed liquid is contained.

8. The automatic analyzing apparatus according to any one of claims 4 to 7, wherein the first reaction container has a shape that is different from a shape of the second reaction container.

9. The automatic analyzing apparatus according to any one of claims 1 to 8, further comprising a dispensing probe configured to suck the first mixed liquid contained in the first reaction container in the first disposing unit, and to discharge the first mixed liquid into the second reaction container that is blank in the second disposing unit.

10. The automatic analyzing apparatus according to claim 9, further comprising a dispensing arm that includes the dispensing probe and is constituted by a multiaxial arm.

11. The automatic analyzing apparatus according to any one of claims 1 to 10, further comprising processing circuitry configured to transfer the first reaction container, in which the first mixed liquid is contained, from the first disposing unit to the second disposing unit,
wherein the second reaction container is the transferred first reaction container.

12. The automatic analyzing apparatus according to claim 11, wherein the processing circuitry is further configured to clean the second reaction container that has been measured, and to transfer the cleaned second reaction container from the second disposing unit to the first disposing unit.

13. The automatic analyzing apparatus according to claim 11 or 12, wherein the processing circuitry is further configured to acquire the second reaction container that has been measured.

14. The automatic analyzing apparatus according to any one of claims 1 to 13, further comprising a transfer arm configured to hold the first reaction container that is disposed in the first disposing unit and contains the first mixed liquid, and to transfer the first reaction container from the first disposing unit to the second disposing unit,
wherein the second reaction container is the transferred first reaction container.

15. The automatic analyzing apparatus according to claim 14, further comprising a cleaning unit configured to clean the second reaction container that has been measured,
wherein the transfer arm is configured to transfer the cleaned second reaction container from the second disposing unit to the first disposing unit.
